**Europäisches Patentamt**

**European Patent Office**

**Office européen des brevets**

(19)

(11) Publication number: **0 108 167**
**A1**

(12) # EUROPEAN PATENT APPLICATION

(21) Application number: **82201361.1**

(22) Date of filing: **01.11.82**

(51) Int. Cl.³: **B 29 D 27/02**

(43) Date of publication of application:
**16.05.84 Bulletin 84/20**

(84) Designated Contracting States:
**AT BE CH DE FR GB IT LI LU NL SE**

(71) Applicant: **ISOMO personenvennootschap met beperkte aansprakelijkheid**
**Wittestraat 1**
**B-8710 Kortrijk(BE)**

(72) Inventor: **Vereecke, Paul**
**Wittestraat 3**
**B-8710 Kortrijk-Heule(BE)**

(74) Representative: **Donné, Eddy**
**M.F.J.Bockstael Arenbergstraat 13**
**B-2000 Anvers(BE)**

(54) **Process for the continuous manufacture of phenolic foam layers and installation applying said process.**

(57) A process for the continuous manufacture of phenolic foam layers, characterized that it mainly consists in bringing together phenolic resin, freon, an acid (e.g. sulphuric acid) and compressed air in order to achieve a first mixing of the afore-mentioned components, subjecting said mixture to an additional or second mixing, e.g. a mechanical mixing, and maintaining the temperature of said mixture between well determined limits in order to keep foam formation under control. The invention also relates to an installation applying said process.

EP 0 108 167 A1

./...

0108167

- 1 -

"Process for the continuous manufacture of phenolic foam layers
and installation applying said process".

This invention relates to a process for the continuous manufacture of layers of isolating material, especially phenolic
foam, as well as to installations applying said process, the
main object of the invention being the manufacture of an
uninflammable foam product presenting enormous advantages
both as a thermal and a sound-absorbing isolating material
with respect to the materials of the prior art, which are
inflammable and mostly generate a toxic gas.

It is known that the addition of a phenolic resin to liquid
freon and an acid results in an exothermic reaction wherein
a gas is generated occasioning foaming whereby an amount
of heat is formed whose temperature is one of the determining factors for the intensity with which curing of the foam
takes place.

It is also known that mixing of the phenolic resin with freon
and an acid according to the prior art is very poor, which is
mainly due to the high viscosity of the resin whereby foam
formation and curing cannot be controlled.

So, this invention relates to a process and an installation
applying said process, whereby the aforesaid and other disadvantages which are an impediment in the formation of phenolic foam isolating layers, can be obviated.

The Applicant has found indeed that for suitably mixing the phenolic resin, the liquid freon and the acid it is advantageous to use compressed air and thereafter to subject the mixture obtained to a second mixing treatment.

Whereas the first mixing treatment is realized by introducing the compressed air into a mixing chamber together with phenolic resin, freon and acid, the second mixing treatment is performed mechanically, e.g. by providing mixing elements in said mixing chamber.

The Applicant has also found that in order to make the gas evolution proceed suitably, the temperature of the mixture should be kept under control, the latter generally consisting in either cooling the products supplied to the mixing chamber within appropriate limits, or cooling said mixing chamber and/or channels through which the mixture should move before leaving the nozzle, wherein for that purpose a jacket is provided round at least a part of the mixing chamber and optionally round the pipes wherein a fluid is circulated, or some combination of the aforementioned possibilities. The object always is to maintain the mixing chamber at a temperature situated between well-determined limits, e.g. between 20°C and 40°C.

The process according to the present invention showing the aforementioned and other advantages mainly consists in bringing together phenolic resin, freon, an acid, e.g. sulphuric acid, and compressed air in order to obtain a first mixture of the compounds mentioned; subjecting said mixture to an additional or second mixing treatment, e.g. a mechanical mixing treatment, and maintaining the temperature of this mixture between well determined limits in order to control foaming.

The invention also relates to an installation applying the above-mentioned process, said installation being mainly formed by a mixing chamber which at its bottom is provided with a discharge terminating in a nozzle, said mixing chamber being provided with a supply for phenolic resin, freon, an acid, mostly sulphuric acid, and compressed air, wherein in this mixing chamber additional mechanical mixing means and at least round a part of the mixing chamber means are provided that allow the temperature of the mixture to be maintained between well defined limits.

In order to better show the characteristics of the present invention a possible embodiment of an installation applying the process of the present invention is described by way of an example without limiting the scope thereof.

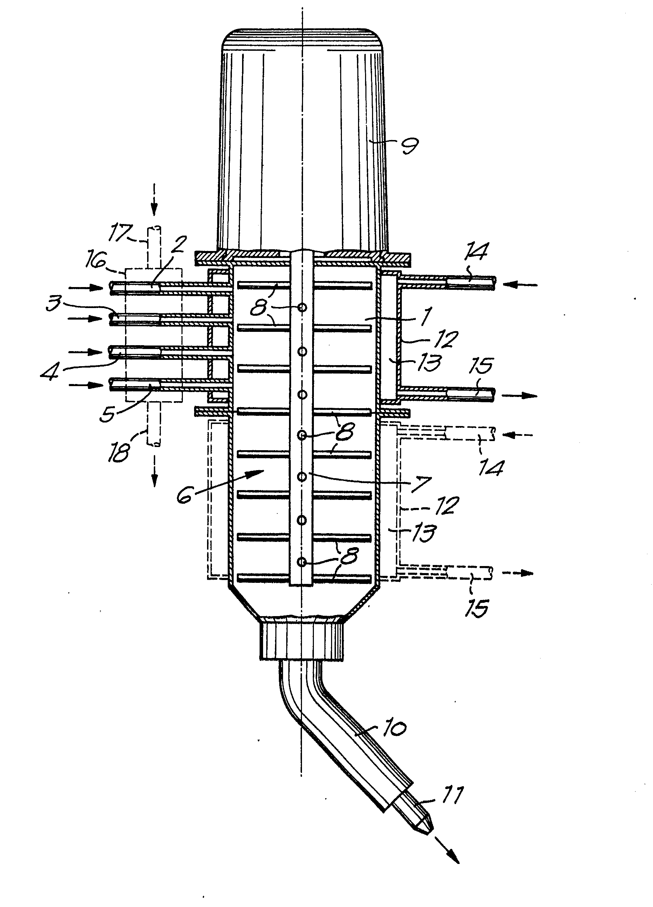

This installation is represented in the accompanying figure and mainly consists in a mixing chamber 1 wherein, in this case, four pipes 2 to 5 run, which e.g. are intended for the introduction of phenolic resin, freon, acid and compressed air into the mixing chamber.

In the mixing chamber 1 are mixing elements 6, which in this embodiment are formed by a rod 7 to which stirring pegs 8 are fixed.

Rod 7 carrying the stirring pegs 8 is driven by a suitable motor 9, e.g. a hydraulic motor.

Underneath, the mixing chamber 1 is extended by a conduit 10, which ends in an appropriate nozzle 11.

According to the invention the mixing chamber is provided at least round its upper part with a jacket 12 so as to form a chamber 13 that is connected to an inlet 14 and an outlet 15.

As already appears from the foregoing it suffices to introduce the phenolic resin, the freon, the acid, e.g. sulphuric acid, and compressed air in the suitable ratio into the mixing chamber 1 for achieving that, as a result of the presence of the compressed air, a first efficient mixing of the afore-mentioned components takes place, a second mixing occurring almost simultaneously under the influence of the mixing means 6, which are actuated by the motor 9.

Meeting of the above-mentioned components in the mixing chamber 1 causes an exothermic reaction, the heat set free thereby being controlled by the circulation of a fluid in said chamber 13.

Although the purpose of said fluid mostly is one of cooling, it is not excluded to convert it into a heating fluid.

Actually, the general purpose of this fluid is to maintain the mixture at a temperature situated between well determined limits so as to keep the formation of heat and hence the formation of foam under control and to avoid any deleterious curing in the mixing chamber.

It is clear that the embodiment represented in the figure is intended to be the basic representation.  Indeed, the supply pipes 2 to 5, e.g., can be arranged according to any other configuration.  As a matter of fact, an advantageous embodiment is formed by a supply line of sulphuric acid into which the compressed-air line ends, two outlets starting from the supply line of sulphuric acid, one of which ending in the supply line of phenolic resin and the other into the supply line of freon liquid, the latter lines terminating separately or together into the mixing chamber 1.

It is also possible, optionally in combination with the mentioned jacket 12, to mount a chamber 16 round one or more supply lines 2 to 5 to which lines 17-18 are connected and wherein, as is the case with a jacket 12, in this chamber a fluid can circulate bringing one or more of the components of the mixture to a suitable temperature so as to control the exothermic reaction of said different components.

Evidently, still other modifications are possible without departing from the scope of the invention.

Claims.

1.- A process for the continuous manufacture of layers of phenolic foam, characterized thereby that it mainly consists in bringing together phenolic resin, freon, an acid (e.g. sulphuric acid) and compressed air in order to achieve a first mixing of the afore-mentioned components, subjecting said mixture to an additional or second mixing, e.g. a mechanical mixing, and maintaining the temperature of said mixture between well determined limits in order to keep foam formation under control.

2.- A process according to claim 1, characterized in that the temperature of the mixture is maintained between determined limits by keeping said mixture at the desired temperature during mixing and almost until it leaves the mixing chamber.

3.- A process according to claim 1, characterized in that the temperature of said mixture is maintained between determined limits by keeping one or more components of said mixture at a suitable temperature before it (they) is (are) supplied to the mixing chamber.

4.- A process according to claim 1, characterized in that the temperature of said mixture is maintained between determined limits by keeping one or more components of said mixture at a suitable temperature before it is introduced into said mixing chamber on the one hand, and by keeping said mixture at the desired temperature during the mixing treatment and almost until it leaves said mixing chamber on the other hand.

5.- A process according to any of claims 1 to 4, characterized in that the temperature of the mixture is maintained between 20° and 40°C.

6.- A process according to any of claims 1 to 4, characterized in that the temperature of said mixture is maintained constant or nearly constant.

7.- A process according to any of the foregoing claims, characterized in that said phenolic resin, freon, acid and compressed air are introduced simultaneously into the mixing chamber.

8.- A process according to any of claims 1 to 6, characterized in that the compressed air admixed to the acid is mixed in equal parts with the phenolic resin on the one hand, and with freon on the other hand before the whole is introduced into the mixing chamber proper.

9.- An installation applying the process according to any of the foregoing claims, characterized in that it mainly consists of a mixing chamber (1) which at its bottom is provided with a discharge (10) terminating in a nozzle (11), said mixing chamber (1) being provided with a supply for phenolic resin, freon, an acid (mostly sulphuric acid), and compressed air, said mixing chamber (1) being additionally provided with mechanical mixing means (6) and at least round a part of the mixing chamber having means allowing the temperature of said mixture to be maintained between determined limits.

10.- An installation applying the process according to any of claims 1 to 8, characterized in that it mainly consists of a mixing chamber (1) being provided at its bottom with a discharge (10) terminating in a nozzle (11), said mixing chamber (1) being provided with a supply for phenolic resin, freon, an acid (mostly sulphuric acid) and compressed air and with additional mechanical mixing means (6) and wherein at least round one of the supply lines (2-3-4-5) of the components of the mixture means are provided which allow the temperature of the mixture to be maintained between determined

- 3 -

0108167

limits.

11.- An installation according to claim 9 or 10, characterized in that four supply lines (2-3-4-5) end in the mixing chamber (1), for phenolic resin, freon, acid and compressed air respectively.

12.- An installation according to claims 9 or 10, characterized in that two supply lines end into the mixing chamber (1), one for a mixture of phenolic resin, acid and compressed air, another for freon, acid and compressed air.

13.- An installation according to claim 9 or 10, characterized in that one supply line ends into the mixing chamber (1).

14.- An installation according to any of claims 9 to 13, characterized in that the supply line(s) end(s) into the upper part of the mixing chamber (1).

15.- An installation according to claim 9 or 10, characterized in that the mechanical mixing means (6) are formed by a rod (7) extending almost over the whole height of the mixing chamber (1) and being provided all along with projecting parts (8).

16.- An installation according to claim 9, characterized in that the means for controlling the temperature of the mixture are formed by a jacket (12) applied to at least a part of the mixing chamber (1), a cooling or heating fluid circulating through said jacket (12).

17.- An installation according to claim 10, characterized in that the means for controlling the temperature of the mixture are formed by a chamber (16) mounted round at least one supply line for the mixture components, a cooling or heating fluid circulating through said chamber.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 158 735 (BEKAERT) <br><br> * Whole document * <br><br> --- | 1-4,9, 10,15 | B 29 D 27/02 |
| Y | US-A-3 999 230 (BRÜNING) <br> * Whole document * <br><br> --- | 1,9,10 | |
| A | FR-A-1 405 984 (LEGAL) <br> * Whole document * <br><br> --- | 1 | |
| A | GB-A- 947 410 (PERMUTIT) <br> * Whole document * <br><br> --- | 9 | |
| A | US-A-3 347 529 (HOPPE) <br> * Whole document * <br><br> --- | 9 | TECHNICAL FIELDS SEARCHED (Int. Cl. ³) |
| A | AU-B- 466 801 (CINCINNATI MILACRON) <br> * Whole document * <br><br> ----- | 9 | B 29 D 27/00 |

The present search report has been drawn up for all claims

| Place of search | Date of completion of the search | Examiner |
|---|---|---|
| THE HAGUE | 05-07-1983 | KUSARDY R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82